# EUROPÄISCHE PATENTSCHRIFT

(11) **EP 2 647 555 B1**
(45) Veröffentlichungstag und Bekanntmachung des Hinweises auf die Patenterteilung: **13.12.2017**
(21) Anmeldenummer: 13162104.7
(22) Anmeldetag: 03.04.2013
(51) Int. Cl.: B62D 33/02

(54) **Planenbrettanordnung, Laderaumaufbau und Nutzfahrzeug**
Tarpaulin board assembly, cargo space superstructure and commercial vehicle
Assemblage d'une planche de ridelle , superstructure volume de chargement et véhicule utilitaire

(30) Priorität: 03.04.2012 DE 202012101206 U
(43) Veröffentlichungstag der Anmeldung: 09.10.2013
(73) Patentinhaber: Hofmeister & Meincke GmbH, 28279 Bremen (DE)
(72) Erfinder: Anstipp, Andreas, 28876 Oyten (DE)
(74) Vertreter: Wasiljeff, Johannes M.B.

(56) Entgegenhaltungen:
- EP-A1- 2 184 221
- DE-A1- 2 728 450
- DE-A1- 10 238 785
- DE-A1-102007 037 294
- DE-A1-102008 025 440
- DE-U1-202007 001 329
- ES-U- 1 035 193
- US-A- 4 025 211
- US-A- 4 986 513

## Beschreibung

Die Erfindung betrifft eine Planenbrettanordnung mit mindestens einem Planenbrett und mindestens zwei Halterungen, wobei das mindestens eine Planenbrett zwischen zwei benachbarten Rungen eines Planenaufbaus eines Nutzfahrzeugs in den jeweils an benachbarten Rungen befestigten und zueinander weisenden Halterungen aufnehmbar ist.

Bei vielen Nutzfahrzeugaufbauten wird eine zu transportierende Ladung mit einem Planenaufbau, insbesondere Seitenschiebeplanenaufbau mit Schiebeverdeck, gegenüber Witterungseinflüssen und anderen Beeinträchtigungen geschützt. Darüber hinaus minimiert ein derartiger Planenaufbau den Luftwiderstandsbeiwert des ganzen Nutzfahrzeugs. Ein derartiger Planenaufbau von Nutzfahrzeugen umfasst im Allgemeinen eine Plane, die auf Planenrohren sowie Längs- und Querholmen aufliegt. Die Planenrohre sowie die Längs- und Querholme sind ihrerseits mit am Fahrzeugchassis befestigten Rungen bzw. Pfosten verbunden und bilden gemeinsam das Gestell für den Planenaufbau. Zwischen jeweils zwei benachbarten Rungen ist oftmals eine Vielzahl von herausnehmbaren, horizontalen Planenbrettern in rungenseitigen Taschen aufgenommen, die eine seitliche Anlagefläche für die Plane bilden und die darüber hinaus zumindest teilweise zur Ladungssicherung beitragen.

Aus der DE 20 2008 012 725 U1 ist eine derartige Tasche bekannt, die paarweise an Längsseiten des Aufbaus eines Nutzfahrzeuges festsetzbar ist und die zur Aufnahme des Endbereichs eines Einsteckbrettes bzw. eines Planenbrettes zur Ladungssicherung ausgelegt ist und die an zwei winklig zueinander verlaufenden Seiten offen ist. Erfindungsgemäß ist die Tasche als ein einstückiges Kunststoffformteil ausgebildet.

Bei starken Verzögerungen des Nutzfahrzeugs, insbesondere bei Bremsmanövern, Schleudervorgängen und/oder Unfällen, können hohe Verzögerungskräfte auf die Ladung einwirken. Diese extremen mechanischen Kräfte müssen zumindest teilweise von der Plane abgefangen und in den Fahrzeugaufbau übergeleitet werden, um unter anderem zu verhindern, dass die Ladung ins Rutschen gerät, die Seitenplane durchschlägt und unkontrolliert auf die Fahrbahn gelangt.

Die üblicherweise mit Holzleisten bzw. mit Holzbrettern gebildeten Planenbretter sind jedoch nicht in der Lage, starken mechanischen Kräften zu widerstehen, die insbesondere durch Querbeschleunigungen hervorgerufen werden. In einem solchen Fall biegen sich die Planenbretter stark nach Außen durch, wodurch diese aus den zugehörigen Aufnahmetaschen heraus rutschen. Ferner können die Planenbretter auch durchbrechen oder einknicken. Um auch in diesen Belastungskonstellationen die Ladung zuverlässig auf der Ladefläche zu halten, ist es bei bekannten Planenaufbauten für Nutzfahrzeugaufbauten üblich, Planen mit einer hohen mechanischen Belastbarkeit einzusetzen. Die notwendige mechanische Widerstandsfähigkeit, insbesondere die Reißfestigkeit, wird im Allgemeinen durch eine Faserarmierung der Plane in Verbindung mit einer hohen Materialstärke erreicht. Nachteilig sind unter anderem das sich ergebende hohe Gewicht der Plane und eine hohe Steifigkeit derselben infolge der hohen Materialstärke und der Faserverstärkung, die mit einer schweren Handhabbarkeit, insbesondere bei tiefen Temperaturen, einhergeht. Aufgrund der bei tiefen Temperaturen besonders hohen Steifigkeit der Plane werden im täglichen Fuhrbetrieb bzw. im allgemeinen Gebrauch zum Beispiel Auf- und Abladeprozesse für den Benutzer beträchtlich erschwert, was unter anderem zu verlängerten Lade- und Abladezeiten führt.

Aus DE 102 38 785 A1 ist ferner ein Nutzfahrzeugaufbau mit Planenbrettern bekannt, die jedoch mehrteilig ausgebildet sind. Dabei weist eine sogenannte Seitenlatte an ihren Enden jeweils ein komplex geformtes Endprofil auf, das aufgrund seiner Formgebung empfindlich gegenüber Schlagbeanspruchungen ist. Fällt eine derartige Seitenlatte aus einer Höhe von bspw. 2 oder 3 Metern zu Boden - was insbesondere beim Be- und Entladen eines derartigen Nutzfahrzeugs regelmäßig vorkommt - ist die Wahrscheinlichkeit sehr hoch, dass die Seitenlatte mit einem ihrer Endprofile auf dem Boden auftrifft und dieses dann so beschädigt wird, dass es anschließend nicht mehr verwendet werden kann. Dies ist jedoch besonders nachteilig, wenn dadurch das Fahrzeug an der Weiterfahrt gehindert wird und zunächst eine Austauschlatte beschafft werden muss.

Der Erfindung liegt nach alledem das Problem zugrunde, eine robuste Planenbrettanordnung der eingangs genannten Art anzugeben, die im Wesentlichen parallel zu einer Ladefläche des Nutzfahrzeugs einwirkende mechanische Lasten weitgehend unabhängig von einer Plane zuverlässig aufzunehmen vermag.

Die Erfindung löst dieses Problem dadurch, dass zwei Halterungen jeweils einen Zapfenwinkel und eine Tasche zur Aufnahme eines Endabschnittes eines als einteiliges Hohlprofil ausgebildeten Planenbrettes aufweisen oder mindestens eine Halterung einen Zapfenwinkel sowie eine Tasche aufweist und mindestens eine Halterung ein U-Profil und mindestens einen Zapfenwinkel zur Aufnahme eines Endabschnittes eines als einteiliges Hohlprofil ausgebildeten Planenbrettes aufweist, wobei in beiden Endabschnitten des mindestens einen Planenbrettes eine Ausnehmung eingebracht ist, in die jeweils ein Zapfen eines Zapfenwinkels zumindest bereichsweise formschlüssig einbringbar ist, um unabhängig von einer Plane einen kraftschlüssigen Verbund der Rungen gegenüber im Wesentlichen parallel zu einer Ladefläche des Nutzfahrzeugaufbaus angreifenden mechanischen Kräften zu erreichen.

Infolge der erfindungsgemäßen Planenbrettanordnung wird ein kraftschlüssiger Verbund zwischen den Rungen eines Planenaufbaus eines Nutzfahrzeugaufbaus eines Nutzfahrzeugs geschaffen, so dass die Ladung unbeschadet der mechanischen Eigenschaften der Plane auch im Fall von hohen Verzögerungskräften, wie sie zum Beispiel bei Unfällen auftreten, nicht verrutschen und im Extremfall aus dem Laderaum in die Umgebung, insbesondere die Fahrbahn des Nutzfahrzeugs, gelangen kann. Hierdurch wird ein Einsatz von Planen mit einer deutlich reduzierten Materialstärke möglich, wodurch sich die Handhabbarkeit der Plane für einen Benutzer verbessert und sich zugleich eine optimale Sicherung der Ladung ergibt.

Die Ausbildung des Planenbrettes als einteiliges Hohlprofil ist insbesondere deshalb vorteilhaft, da im Gegensatz zu bekannten Planenbrettern, wie beispielsweise aus DE 102 38 785 A1 bekannt, keine empfindlichen Endprofile beim Herunterfallen eines Planenbrettes aus etwa der Höhe des Fahrzeugaufbaus das Planenbrett substantiell beschädigt werden können.

Ferner ist eine einteilige Ausbildung als Hohlprofil deshalb vorteilhaft, da auf diese Weise ein Planenbrett mit minimalem Aufwand gekürzt werden kann, wenn beispielsweise veränderte Abstände zweier benachbarter Rungen dies erfordern.

Darüber hinaus ist ein Hohlprofil vorteilhaft, da bei einem massiven Planenbrett eine Bohrung zur Aufnahme eines Zapfens als Führung wirken würde, welche dazu führen könnte, dass der Zapfen verbiegt, falls das Planenbrett nur einseitig eingehängt ist, während das andere Ende frei herabhängt. Demgegenüber bietet ein Hohlprofil den Vorteil, dass ein derartiger Zapfen auch dann nicht verbiegt, wenn das Planenbrett nur einseitig eingehängt ist, da das Planenbrett bei einer Ausbildung als Hohlkammerprofil nicht als Führung wirkt.

Vorzugsweise weisen die Zapfen jeweils eine Sicke auf, welche vorteilhafterweise nur entlang eines Abschnitts des Umfangs des Zapfens oder entlang des gesamten Umfangs vorgesehen ist. Vorteilhafterweise ist die Breite der Sicke an die Wandstärke des Planenbretthohlprofils angepasst. Somit erlaubt diese Sicke eine Verhakung des Planenbretts mit dem jeweiligen Zapfen, wenn das Planenbrett beispielsweise durch von der Ladung aufgebrachte Kräfte seitlich beansprucht wird. Diese Ausgestaltung des Zapfens verhindert somit, dass das Planenbrett aus dem Zapfen gedrückt werden kann, wenn der Planenaufbau beispielsweise durch ein Verrutschen der Ladung besonderen Kräften ausgesetzt wird. Auf diese Weise wird zudem die Stabilität des Aufbaus erhöht.

Vorzugsweise weist das Planenbretthohlprofil wenigstens eine in Längsrichtung des Hohlprofils verlaufende Sicke auf. Vorteilhafterweise ist diese Sicke an einer der Schmalseiten des Planenbretthohlprofils vorgesehen. Diese Sicke bildet einen dachartigen Profilverlauf. Ein derartiger Profilverlauf, insbesondere bei Bereitstellung dieser Sicke an der bodenseitigen Schmalseite des Planenbretthohlprofils, bewirkt eine größere Auflagefläche des Planenbretts am Zapfen. Auf diese Weise wird die Beanspruchung des Planenbretts reduziert. Insbesondere wird die Auflaufwirkung des Materials des Planenbretthohlprofils reduziert, wenn das Planenbrett in seiner Längsrichtung Kräfte auf den Zapfen ausübt. Das Planenbrett verträgt somit höhere Zugbelastungen. Zusätzlich oder alternativ können die Wandstärken des Planenbretthohlprofils geringer gewählt werden, was ggf. zu einer Materialeinsparung und damit Gewichtseinsparung führt. Vorzugsweise ist das Planenbrett mit einem Rechteckhohlprofil gebildet, dessen Längsseiten eine Wandstärke aufweisen, die größer als eine Wandstärke der Schmalseiten ist. Hierdurch wird insbesondere die mechanische Belastbarkeit des Planenbrettes gegenüber Querkräften, die quer zu einer Längsachse des Nutzfahrzeugs angreifen, weiter gesteigert. Alternativ weisen die Schmalseiten und die Längsseiten gleiche Wandstärken auf.

Vorteilhafterweise ist das Hohlprofil mit einem Leichtmetall, insbesondere mit einer Aluminiumlegierung gebildet. Hierdurch ergibt sich im Vergleich zu konventionellen Planenbrettern aus Holz ein geringes Gewicht der gesamten Planenbrettanordnung in Verbindung mit einer hohen Korrosionsfestigkeit, einer guten Umformbarkeit und einer guten mechanischen Belastbarkeit.

In einer vorteilhaften Weiterbildung sind die Ausnehmungen in beiden Endabschnitten eines Planenbrettes als Bohrungen ausgeführt. Hierdurch lassen sich die Ausnehmungen vor Ort einfach durch Bohren mittels eines überall verfügbaren Standardwerkzeugs und zudem passgenau, insbesondere unabhängig von einer individuellen Länge eines jeden Planenbrettes, herstellen. Alternativ sind die Ausnehmungen quadratisch oder rechteckig ausgebildet, bspw. durch Stanzen. Diese Weiterbildungen ermöglichen einen robusten und einstückigen bzw. einteiligen Aufbau der Planenbretter.

In vorteilhafter Weise weist mindestens eine Tasche eine Rückwand auf, an die sich unter einem rechten Winkel beidseitig eine laderaumseitige und eine planenseitige Seitenwand anschließen, wobei an den parallel beabstandet zueinander verlaufenden Seitenwänden jeweils unter einem rechten Winkel eine Bodenlasche als Auflager für ein Planenbrett ausgebildet ist. Hierdurch lässt sich die Tasche auf einfache Art und Weise durch Abkanten eines Zuschnittes einstückig fertigen. In die Rückwand der Tasche sind mehrere Bohrungen für geeignete Befestigungselemente, wie zum Beispiel Nieten, Bolzenverbindungen, eingebracht, mit denen die Tasche an einer Runge befestigt werden kann. Ein Innenabstand zwischen den Seitenwänden ist so bemessen, dass beide Endabschnitte eines Planenbrettes vorzugsweise mit leichter Spielpassung in jeweils einer Tasche aufnehmbar sind.

Vorzugsweise weist die planenseitige Seitenwand der Tasche eine größere Höhe als die laderaumseitige Seitenwand der Tasche auf und die Rückwand weist eine schräg verlaufende Außenkante auf. Hierdurch wird der Einsteckvorgang des Planenbrettes bei Lade- und Abladevorgängen erleichtert, wobei die planenseitige Seitenwand als Anschlag dient und das Planenbrett oberhalb der laderaumseitigen Seitenwand eingeschoben wird.

Bevorzugt weist die planenseitige Seitenwand mindestens eine Ausnehmung, insbesondere eine Bohrung, auf. Hierdurch kann auf einfache Art und Weise visuell überprüft werden, ob die Planenbretter ordnungsgemäß, insbesondere vollständig in die Taschen eingesteckt sind.

Vorzugsweise sind die Bodenlaschen durch einen Spalt separiert und in beide Bodenlaschen ist eine Ausnehmung eingebracht, die gemeinsam eine Durchführung für einen Zapfen bilden. Der Spalt ermöglicht eine einstückige Herstellung der Taschen, zum Beispiel durch Abkanten. Darüber hinaus wird das Einbringen der spiegelbildlich ausgeführten Ausnehmungen in die Bodenlaschen vereinfacht. Zur Erhöhung der mechanischen Belastbarkeit können die Bodenlaschen erforderlichenfalls entlang des Spaltes verbunden, insbesondere miteinander verschweißt werden.

Vorteilhafterweise weisen die mindestens zwei Zapfenwinkel einen Rückenflansch zur Befestigung an einer Runge auf, der unter einem rechten Winkel in eine planenseitige Knotenwand übergeht, an die sich unter einem rechten Winkel ein Tragflansch anschließt, in dem ein Zapfen befestigt, insbesondere eingeschweißt, ist. Hierdurch kann der Zapfenwinkel auf einfache Art und Weise durch Abkanten einstückig hergestellt werden. Der Rückenflansch weist mehrere Bohrungen auf, in denen geeignete Befestigungselemente zur Befestigung des Zapfenwinkels festgesetzt werden können. In der Knotenwand sind gleichfalls Bohrungen vorgesehen, die eine einfache seitliche Befestigung des Zapfenwinkels im U-Profil im Rahmen einer zweiten Ausführungsvariante der Halterungen gestatten.

In einer vorteilhaften Weiterbildung ist eine Tragflanschkante mit einer Rückenflanschkante des Zapfenwinkels verbunden, insbesondere verschweißt. Hierdurch ergibt sich eine weiter gesteigerte mechanische Belastbarkeit des Zapfenwinkels.

In einer vorteilhaften Ausführungsform sind die Endabschnitte der Planenbretter und/oder die Bodenlaschen der Taschen und/oder die Tragflansche der Zapfenwinkel zumindest bereichsweise mit einem Dämpfungsmittel, insbesondere einem plattenförmigen Elastomer, zur Schall- und Schwingungsdämpfung versehen. Hierdurch kann die Geräuschentwicklung der Planenbrettanordnung weiter optimiert werden.

In vorteilhafter Weise weisen Kegelstumpfabschnitte der Zapfen jeweils einen Spitzenabschnitt mit einem kleinen Krümmungsradius auf und/oder die Kegelstumpfabschnitte weisen Spitzenabschnitte mit einer erhöhten mechanischen Härte auf. Hierdurch kann auf einfache Art und Weise die exakte Position der jeweils in die Endabschnitte einzubringenden Ausnehmungen markiert, angezeichnet bzw. angekörnt werden.

Vorzugsweise ist das U-Profil aus Stahl oder einer Leichtmetalllegierung, insbesondere einer Aluminiumlegierung, gebildet. Hierdurch ergibt sich ein geringes Gewicht in Verbindung mit einer hohen Korrosionsfestigkeit und einer hohen mechanischen Steifigkeit der Planenbrettanordnung.

Weiterhin ist vorgesehen, dass der Nutzfahrzeugaufbau mindestens eine Planenbrettanordnung nach einem der Ansprüche 1 bis 13 aufweist. Hieraus ergibt sich eine ausgezeichnete Widerstandsfähigkeit des Nutzfahrzeugsaufbaus - unabhängig von der Belastbarkeit der Plane des Planenaufbaus des Nutzfahrzeugs - gegenüber starken Verzögerungskräften, wie sie beispielsweise bei Unfällen, Bremsmanövern oder Ausweichmanövern des Nutzfahrzeugs auftreten können. Hierdurch wird ein Verrutschen der im Laderaum befindlichen Ladung zuverlässig verhindert. Darüber hinaus verhindert die in hohem Maße eigenstabile Planenbrettanordnung, dass Ladung in derartigen Extremsituationen die Seitenplane durchschlägt und bis in die Umgebung, insbesondere bis auf die Fahrbahn, gelangt.

In einer vorteilhaften Weiterbildung weist das Nutzfahrzeug mindestens einen Nutzfahrzeugaufbau nach Anspruch 14 auf. Hierdurch kann ein beliebiges Nutzfahrzeug mit einem Nutzfahrzeugaufbau ausgerüstet werden, der im Wesentlichen parallel zur Ladefläche einwirkenden starken Verzögerungskräften unabhängig von der Beschaffenheit einer Plane zu widerstehen vermag.

Weitere Ausführungsformen ergeben sich aus den Ansprüchen sowie aus dem anhand der Zeichnung näher erläuterten Ausführungsbeispiel. In der Zeichnung zeigen:
- Fig. 1: eine prinzipielle Seitenansicht eines Nutzfahrzeugs mit einem Planenaufbau sowie mehreren in Halterungen aufgenommenen Planenbrettern;
- Fig. 2: eine perspektivische Teilansicht einer ersten Ausführungsvariante einer Halterung für ein Planenbrett mit einer Tasche und einem Zapfenwinkel;
- Fig. 3: eine isometrische Ansicht eines Planenbrettes;
- Fig. 4: eine perspektivische Teilansicht einer zweiten Ausführungsvariante einer Halterung für ein Planenbrett mit einem U-Profil und einem Zapfenwinkel;
- Fig. 5: eine Ausführungsvariante einer Planenbrettanordnung in Seitenansicht und Ansicht von oben;
- Fig. 6: den linksseitigen Abschnitt der Anordnung gemäß Fig. 5 in einem vergrößerten Maßstab;
- Fig. 7: den rechtsseitigen Abschnitt der Anordnung gemäß Fig. 5 in einem vergrößerten Maßstab;
- Fig. 8: ein alternatives Ausführungsbeispiel zu Fig. 6;
- Fig. 9: ein alternatives Ausführungsbeispiel zu Fig. 7 und
- Fig. 10: eine besondere Ausführungsvariante eines Zapfens mit Sicke.

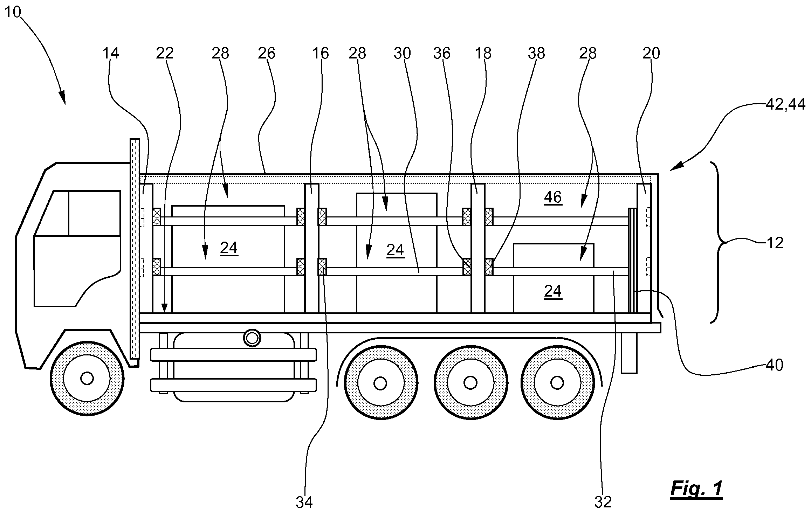

Fig. 1 zeigt eine vereinfachte Seitenansicht eines Nutzfahrzeugs mit einem Planenaufbau, der insbesondere mehrere Seitenplanen und ein dachseitiges Verdeck aufweist, und mehreren in Halterungen aufgenommenen Planenbrettern. Gleiche Bezugsziffern bezeichnen jeweils gleiche Teile.

Ein Nutzfahrzeug 10 umfasst unter anderem einen - einen Planenaufbau umfassenden - Nutzfahrzeugaufbau 12 mit einer Vielzahl von Rungen, von denen lediglich vier Rungen 14 bis 20 bzw. Pfosten zu sehen sind. Bei dem Nutzfahrzeug 10 kann es sich um einen Lastkraftwagen, einen Anhänger, einen Trailer etc. handeln. Auf einer Ladefläche 22 des Nutzfahrzeugaufbaus 12 befindet sich die zu transportierende Ladung 24, wobei Ladungssicherungselemente, wie zum Beispiel Zurrgurte, Zurrhaken, Zurrösen, Zurrlaschen, Spanngurte sowie Zurrlatten der besseren zeichnerischen Übersicht halber nicht dargestellt sind. An den Rungen 14 bis 20 sind der besseren zeichnerischen Übersicht halber gleichfalls nicht dargestellte Längs- und Querholme sowie Planenrohre befestigt, auf denen eine Plane 26 aufliegt.

Der Nutzfahrzeugaufbau 12 bzw. der Planenaufbau ist mit einer erfindungsgemäßen Planenbrettanordnung 28 ausgestattet. Die Planenbrettanordnung 28 umfasst unter anderem eine Vielzahl von Planenbrettern, von denen lediglich zwei Planenbretter 30,32 eine Bezugsziffer tragen. Zwischen der vorderen Runge 14 sowie der hinteren Runge 20 sowie den jeweils dahinterliegenden, nicht sichtbaren Rungen, verlaufen senkrecht zur Zeichenebene jeweils weitere, hier jedoch nicht dargestellte Planenbretter. Die Planenbretter dienen unter anderem zur Lagesicherung der Ladung 24 sowie als seitliches Auflager für die Plane 26.

Das Planenbrett 30 ist in zwei Halterungen 34,36 zwischen den benachbarten Rungen 16,18 aufgenommen, während das Planenbrett 32 in zwei Halterungen 38,40 zwischen den beiden benachbarten Rungen 18 und 20 aufgenommen ist. Der konstruktive Aufbau der übrigen, nicht mit Bezugsziffern versehenen bzw. verdeckten Halterungen entspricht jeweils dem der Halterungen 34 bis 40.

Die Planenbrettanordnung 28 stellt zusammen mit den nicht dargestellten Planenrohren, den Längs- und Querholmen, den Rungen bzw. den Pfosten sowie gegebenenfalls weiteren Komponenten ein Gestell 42 für die Plane 26 dar, wobei das Gestell 42 und die Plane 26 einen Planenaufbau 44 des Nutzfahrzeugaufbaus 12 verkörpern. Der Planenaufbau 44 ist vorzugsweise als Seitenschiebeplanenaufbau mit Schiebeverdeck ausgebildet. Ein Laderaum 46 zur Aufnahme der Ladung wird im Wesentlichen allseitig durch den Planenaufbau 44 und die Ladefläche 22 definiert.

Die Halterungen 34 bis 38 sind gemäß einer ersten Ausführungsvariante ausgestaltet, während die Halterung 40 abweichend hiervon nach Maßgabe einer zweiten Ausführungsvariante ausgeführt ist. Um das Einstecken der Planenbretter 30 zu ermöglichen, müssen für jeweils ein Planenbrett zwei Halterungen 34,36 gemäß der ersten Ausführungsvariante vorgesehen werden. Alternativ kann ein Planenbrett 32 auch in einer Halterung 38 nach Maßgabe der ersten Ausführungsvariante und in einer weiteren Halterung 40 gemäß der zweiten Ausführungsvariante aufgenommen sein. Die Aufnahme von Planenbrettern in zwei Halterungen gemäß der zweiten Ausführungsvariante ist jedoch nicht vorgesehen, da in einer derartigen Konstellation ein Einstecken der Planenbretter nicht oder nur sehr schwer möglich wäre.

Die Halterungen 34 bis 40 sind derart ausgebildet, dass die Planenbretter 30,32 darin jeweils formschlüssig und hierdurch kraftschlüssig aufgenommen sind, wodurch mechanische Kräfte, die insbesondere im Wesentlichen parallel zur Ladefläche 22 - d.h. parallel zur Längs- und/oder Querachse des Nutzfahrzeugs 10 angreifen - unabhängig von der mechanischen Belastbarkeit der Plane 26 zuverlässig aufnehmbar sind. Dasselbe gilt für die übrigen nicht mit Bezugsziffern bezeichneten Halterungen und Planenbretter des Nutzfahrzeugaufbaus 12.

Hierdurch wird für den Fall, dass starke Verzögerungen auf das Nutzfahrzeug 10 einwirken, zuverlässig verhindert, dass die Ladung 24 auf der Ladefläche 22 verrutscht und/oder die Plane 26 im Extremfall sogar durchschlägt und in die Umgebung bzw. auf die Fahrbahn gelangt.

Darüber hinaus wird die Handhabbarkeit der Plane 26 für einen Benutzer, insbesondere bei Lade- und Abladevorgängen durch einen Kraftfahrer, erheblich verbessert, da diese aufgrund der hohen mechanischen Eigenstabilität der Planenbrettanordnung 28 nur noch über eine geringe Materialstärke verfügen muss. Diese erheblich reduzierbare Materialstärke der Plane 26 führt zu einer höheren Flexibilität und zu einem zugleich geringeren Gewicht des ganzen Nutzfahrzeugsaufbaus 12, woraus sich der Effekt einer Nutzlasterhöhung oder Kraftstoffersparnis ergeben kann.

Die Planenbrettanordnung 28 ist bevorzugt als Bausatz ausgeführt, der eine problemlose und schnelle Nachrüstung von bereits vorhandenen Nutzfahrzeugaufbauten 12 von Nutzfahrzeugen 10 aller Art mit den Planenbrettern und den zugehörigen Halterungen erlaubt.

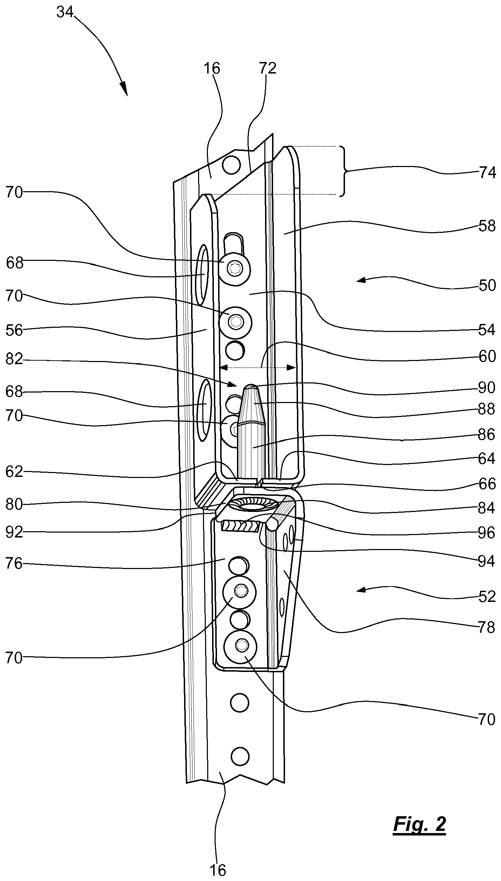

Die Fig. 2 zeigt eine perspektivische Teilansicht der ersten Ausführungsvariante einer Halterung für ein Planenbrett mit einer Tasche und einem Zapfenwinkel.

Die Halterung 34 umfasst eine Tasche 50 und einen Zapfenwinkel 52, die bevorzugt als separate Blechformteile ausgebildet sind. Die Tasche 50 und der Zapfenwinkel 52 werden - beispielsweise durch Abkanten von Zuschnitten - aus Stahl, Legierungen, insbesondere hochfesten Legierungen, oder Kunststoffen, insbesondere hochfesten Kunststoffen, gebildet. Dieses Fertigungsverfahren gewährleistet eine kostengünstige Herstellung der Halterung 34 in großen Stückzahlen bei einer zugleich hohen Maßhaltigkeit. Alternativ können die Tasche 50 sowie der Zapfenwinkel 52 auch mit einem Faserverbundkunststoff gebildet sein.

Die Tasche 50 weist eine näherungsweise rechteckförmige Rückwand 54 auf, an die sich beidseitig Seitenwände 56,58 unter einem rechten Winkel anschließen. Die gleichfalls ungefähr rechteckförmigen Seitenwände 56,58 sind im Wesentlichen parallel beabstandet zueinander ausgebildet. Ein Innenabstand 60 zwischen den Seitenwänden 56,58 ist so bemessen, dass zum Beispiel eines der Planenbretter 30,32 vorzugsweise unter einer leichten Spielpassung in die Tasche 50 eingesteckt werden kann. An beiden Seitenwänden 56,58 ist jeweils eine Bodenlasche 62,64 ausgebildet, die jeweils aufeinander zuweisen und die mit den Seitenwänden 56,58 jeweils einen rechten Winkel einschließen. Zwischen beiden Bodenlaschen 62,64 besteht ein schmaler Spalt 66. Erforderlichenfalls können die Bodenlaschen 62,64 im Bereich des Spaltes 66 durch eine Fügenaht, insbesondere eine Schweißnaht oder Klebenaht, zusammengefügt sein. Zusätzlich können nicht bezeichnete rückwärtige Kanten der Bodenlaschen 62,64 mit der Rückwand 54 verbunden, insbesondere mit dieser verschweißt, sein. Die laderaumseitige Seitenwand 56 verfügt bei einem besonderen Ausführungsbeispiel über zwei Bohrungen 68 größeren Durchmessers, die der einfachen visuellen Überprüfung des ordnungsgemäßen Sitzes eines in die Tasche 50 eingesteckten Planenbrettes dienen. In beiden Bodenlaschen 62,64 befindet sich ferner jeweils eine hier verdeckte, näherungsweise halbkreisförmige Ausnehmung. Diese Ausnehmungen sind jeweils spiegelbildlich zueinander ausgebildet und ergeben zusammen eine in etwa kreisförmige Ausnehmung für die Durchführung eines Zapfens des Zapfenwinkels 52.

In die Rückwand 54 ist eine Vielzahl von Bohrungen und/oder Langlöchern eingebracht, die nicht mit Bezugsziffern versehen sind und in die Befestigungselemente 70, insbesondere Niete oder Bolzenverbindungen, einbringbar sind, mit denen die Tasche 50 hier exemplarisch an der Runge 16 befestigt ist. Zum Festsetzen der Tasche 50 mittels der Befestigungselemente 70 weist die Runge 16 bzw. der Pfosten des Nutzfahrzeugsaufbaus ebenfalls eine Vielzahl von nicht bezeichneten Bohrungen und/oder Langlöchern auf.

Eine Außenkante 72 der Rückwand 54 ist bei einem besonderen Ausführungsbeispiel schräg ausgebildet, so dass eine nicht bezeichnete Höhe der laderaumseitigen Seitenwand 56 kleiner als eine gleichfalls nicht bezeichnete Höhe der planenseitigen Seitenwand 58 ist. Eine sich hieraus ergebende Höhendifferenz 74 zwischen den Seitenwänden 56,58 kann beispielsweise dem Innenabstand 60 zwischen den Seitenwänden 56,58 entsprechen. Infolge der unterschiedlich hoch ausgebildeten Seitenwände 56,58 kann ein Planenbrett leichter in die Tasche 50 eingesteckt werden, da die niedrigere, laderaumseitige Seitenwand 56 das Einführen des Planenbrettes erleichtert während die höhere, planenseitige Seitenwand 58 als rückseitiger Anschlag dient. Abweichend vom gezeigten Ausführungsbeispiel der Fig. 1 können beide Seitenwände 56,58 auch gleich hoch sein.

Der Zapfenwinkel 52 weist einen näherungsweisen rechteckförmigen Rückenflansch 76 auf. An den Rückenflansch 76 schließt sich unter einem rechten Winkel eine näherungsweise dreieckförmige Knotenwand 78 an. Die Knotenwand 78 geht unter einem rechten Winkel in einen rechteckförmigen Tragflansch 80 über. Der Tragflansch 80 verfügt über eine nicht bezeichnete Ausnehmung bzw. Bohrung, in der ein Zapfen 82 befestigt ist. Die Befestigung des Zapfens 82 erfolgt bevorzugt mittels einer ringförmigen Schweißnaht 84. Alternativ kann der Zapfen 82 auch in den Tragflansch 80 eingepresst, eingeklebt, mit diesem verstemmt oder verschraubt sein. Der Zapfen 82 umfasst einen Zylinderabschnitt 86, an den sich ein Kegelstumpfabschnitt 88 anschließt, der in einen Spitzenabschnitt 90 übergeht.

Der Rückenflansch 76 sowie die Knotenwand 78 sind jeweils mit einer Vielzahl von Bohrungen und/oder Langlöchern versehen, die das Festsetzen des Zapfenwinkels 52 an der Runge 16 mittels der Befestigungselemente 70 gestatten. Zur Erhöhung der mechanischen Belastbarkeit des Zapfenwinkels 52 kann eine hintere Tragflanschkante 92 mit einer hinteren Rückenflanschkante 94 verbunden, insbesondere mittels einer raupenförmigen Schweißnaht 96, zusammengefügt sein. Die Tasche 50 und der Zapfenwinkel 52 der Halterung 34 sind lediglich indirekt über die Runge 16 verbunden, können erforderlichenfalls aber auch zusammengefügt sein.

Der Zapfen 82 ermöglicht in Verbindung mit einer korrespondierend ausgebildeten Bohrung in einem Endabschnitt eines Planenbrettes eine form- und kraftschlüssige Festlegung des Endabschnittes des Planenbrettes in der aus dem Zapfenwinkel 52 und der Tasche 50 gebildeten Halterung 34. Ein zweiter Endabschnitt des Planenbrettes ist in einer spiegelbildlich zur Halterung 34 ausgebildeten, hier nicht dargestellten Halterung gleichfalls form- und kraftschlüssig aufgenommen.

Hierdurch kann ein Planenbrett im Wesentlichen alle parallel zur Ladefläche bzw. parallel zur Längs- und/oder Querachse des Nutzfahrzeugs angreifenden mechanischen Kräfte weitgehend unabhängig von der mechanischen Beschaffenheit der Plane des Verdecks des Nutzfahrzeugsaufbaus übertragen. Ein in der Tasche 50 aufgenommenes bzw. eingestecktes Planenbrett kann sich im Ergebnis nur noch parallel zu einer nicht bezeichneten Längsachse des Zapfens 82 bzw. zur Hochachse des Nutzfahrzeugs von dem Zapfen 82 abheben. Auch im Fall einer stärkeren Durchbiegung des Planenbrettes 30 aufgrund von hohen Querkräften verhindern die Zapfen 82 der Halterungen 34 zuverlässig das Herausrutschen des Planenbrettes aus den gegenüberliegend und zueinander weisenden Taschen der Halterungen.

Der Spitzenabschnitt 90 verfügt über einen geringen Krümmungsradius und/oder ist mit einem Material hoher Härte gebildet und/oder ist selbst gehärtet, so dass eine räumliche Lage des Zapfens 82 beispielsweise in Bezug auf ein einzusteckendes Planenbrett mit hoher Genauigkeit angezeichnet bzw. angekörnt werden kann. Hierdurch kann zum Beispiel ein Planenbrett auf einfachste Art und Weise vor Ort konfektioniert, das heißt insbesondere abgelängt und endseitig gebohrt werden, so dass dieses sehr passgenau in den an den Rungen befestigen Halterungen 34 eingesteckt werden kann. Demzufolge ist die Planenbrettanordnung (Bausatz) zur einfachen Nachrüstung von vorhandenen Nutzfahrzeugaufbauten geeignet.

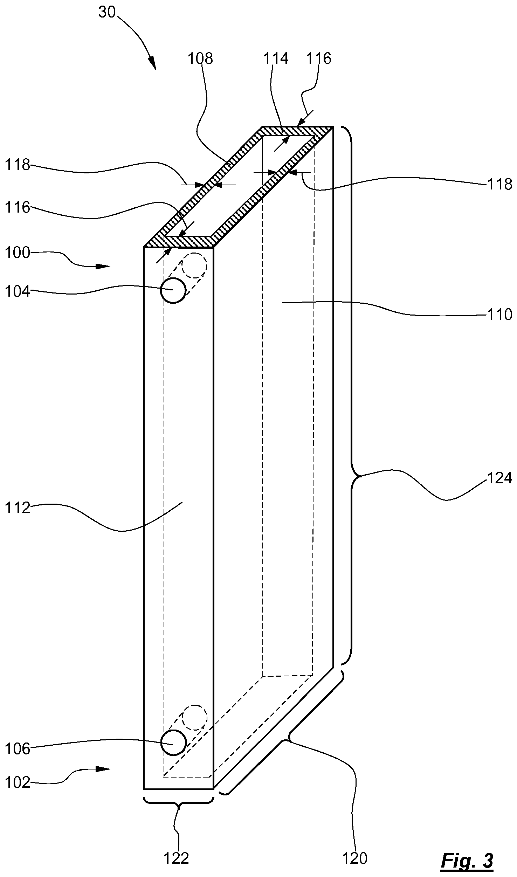

Die Fig. 3 zeigt eine isometrische Ansicht eines Ausführungsbeispiels eines Planenbrettes. Das Planenbrett 30 ist mit einem stranggepressten Rechteckhohlprofil aus einer Aluminiumlegierung gebildet. Abweichend hiervon kann das Planenbrett 30 eine viereckige, eine leicht ovale oder eine andere Querschnittsgeometrie aufweisen. In beiden Endabschnitten 100,102 des Planenbrettes 30 ist jeweils eine zylindrische Bohrung 104,106 eingebracht, in denen die Zapfen 82 der Zapfenwinkel 52 (vgl. insb. Fig. 2) zumindest bereichsweise formschlüssig aufnehmbar sind. Beide Längsseiten 108,110 des Planenbrettes 30 weisen im Vergleich zu den Schmalseiten 112,114 eine reduzierte Materialstärke auf. Eine Wandstärke 116 der Schmalseiten 112,114 beträgt beispielsweise mindestens 3 mm, während eine Wandstärke 118 der Längsseiten 108,110 zum Beispiel mindestens 2 mm beträgt. Aufgrund der höheren Wandstärke 116 im Bereich der Schmalseiten 112,114 erreichen die Planenbretter eine hohe Festigkeit gegenüber insbesondere quer zur Fahrzeuglängsachse wirkenden Kräften, wie sie beispielsweise bei unfallbedingen Schleuderbewegungen auftreten können. Eine Höhe 120 der Längsseiten 108,110 ist deutlich größer dimensioniert als eine Breite 122 der Schmalseiten 112,114, unter anderem um eine vergrößerte Auflagefläche für die Plane zu schaffen. Im gezeigten Ausführungsbeispiel der Fig. 3 ist die Höhe 120 etwa viermal so groß dimensioniert wie die Breite 122. Eine Länge 124 des Planenbrettes 30 ist so bemessen bzw. durch entsprechendes Ablängen eines Planenbrettes mit einer Standardlänge anpassbar, dass dieses jeweils zwischen zwei benachbarten Rungen mit den jeweils daran befestigten Halterungen im Idealfall spielfrei aufnehmbar ist.

Abgesehen von den in beiden Endabschnitten 100,102 vorgesehenen Bohrungen 104,106 erfordert das Planenbrett 30 keine weiteren konstruktiven Vorkehrungen, um den form- und kraftschlüssigen Sitz in den Halterungen zu gewährleisten. Aufgrund dieses äußerst robusten und einteiligen konstruktiven Aufbaus kann das Planenbrett, insbesondere bei Lade- oder Abladevorgängen des Nutzfahrzeugs, zum Beispiel durch Herabfallen auf den Boden oder durch das Überfahren mit einer Ladehilfe, praktisch nicht mehr beschädigt werden.

Im Auslieferungszustand der Planenbrettanordnung weisen die zunächst ungebohrten Planenbretter eine standardisierte Überlänge auf. Dies ermöglicht einen Einsatz der Planenbrettanordnung auch bei Nutzfahrzeugbauten mit jeweils unterschiedlichen Rungenabständen.

In einem ersten Montageschritt der Planenbrettanordnung wird eine der Anzahl der erforderlichen Planenbretter entsprechende Anzahl von Halterungen an den Rungen befestigt. In einem weiteren Montageschritt werden die Planenbretter jeweils soweit durch Sägen abgelängt, dass sie in zwei, an benachbarten Rungen befestigten und in den zugehörigen, zueinander weisenden Halterungen möglichst spielfrei einsteckbar sind. Hat ein Planenbrett die ordnungsgemäße Länge, so kann es auf die Zapfen in den beiden zugehörigen Halterungen aufgelegt werden. Zum Beispiel durch einen leichten Hammer- oder Handschlag auf jeweils einen Endabschnitt des Planenbrettes kann die exakte Position der in den Endabschnitten der Planenbretter einzubringenden Bohrungen mittels der spitzen und/oder gehärteten, selbstkörnenden Zapfen praktisch werkzeuglos markiert bzw. gekörnt werden.

Anhand der Körnung können die beiden in den Endabschnitten vorzusehenden Bohrungen in einem letzten Montageschritt mit hoher Genauigkeit eingebracht werden. Auf dieselbe Art und Weise wird mit sämtlichen Halterungen und Planenbrettern verfahren, bis die Planenbrettanordnung vollständig in den Nutzfahrzeugaufbau integriert ist.

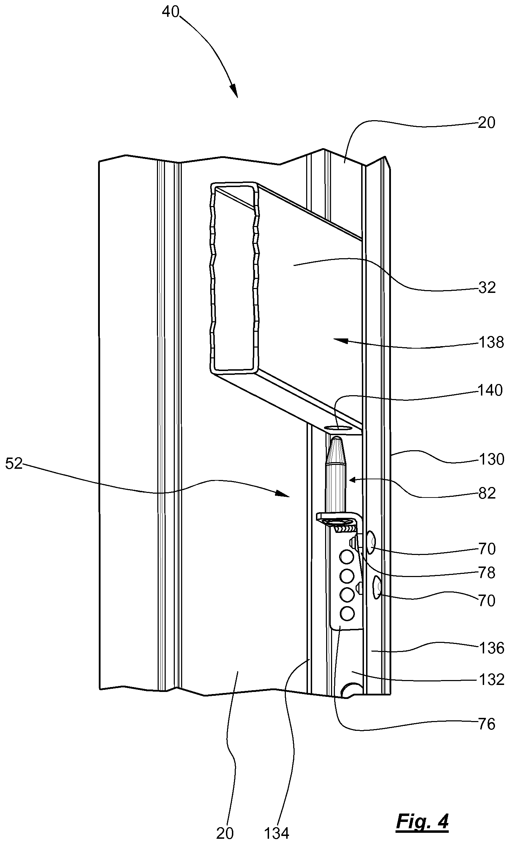

Die Fig. 4 zeigt eine perspektivische Teilansicht einer zweiten Ausführungsvariante einer Halterung mit einem U-Profil und einem Zapfenwinkel mit einem Planenbrett. Das hier eingezeichnete Planenbrett 32 entspricht dem konstruktiven Aufbau des Planenbrettes 30 (vgl. insb. die Fig. 1,3).

Im Unterschied zur ersten Ausführungsvariante der Halterung 34 mit der Tasche 50 und dem Zapfenwinkel 52 ist die Halterung 40 mit einem durchgehenden U-Profil 130 bzw. einer U-Schiene unter Verwendung nur noch eines Zapfenwinkels 52 aufgebaut. Das U-Profil 130 weist eine Rückwand 132 und zwei Seitenwände 134,136 auf und ist bevorzugt aus Stahl oder aus Aluminium im Strangpressverfahren hergestellt. Alternativ oder ergänzend kann das U- Profil 130 auch mit einem Faserverbundkunststoff und/oder mit Holz gebildet sein.

Das U-Profil 130 erstreckt sich bevorzugt über eine gesamte Länge der Runge 20 und ist an dieser mittels nicht dargestellter Befestigungselemente, wie zum Beispiel Nieten oder Bolzenverbindungen, befestigt. Zu diesem Zweck sind in der Rückwand 132 des U-Profils 130 und in der Runge 20 mehrere Bohrungen und/oder Langlöcher zur Aufnahme der Befestigungselemente vorgesehen.

Als ein weiterer Unterschied zur ersten Ausführungsvariante gemäß der Fig. 2 erfolgt die Befestigung in dem U-Profil 130 über nicht bezeichnete Bohrungen und/oder Langlöcher in der Knotenwand 78 des Zapfenwinkels 52 und der planenseitigen Seitenwand 136 des U-Profils 130 mithilfe der Befestigungselemente 70. Zur weiteren Erhöhung der mechanischen Belastbarkeit kann der Rückenflansch 76 des Zapfenwinkels 52 mittels nicht dargestellter Befestigungselemente zusätzlich an der Rückwand 132 des U-Profils 130 befestigt werden. Zu diesem Zweck verfügt auch der Rückenflansch 76 des Zapfenwinkels 52 über eine Vielzahl von nicht bezeichneten Bohrungen.

Zwischen den Seitenwänden 134, 136 ist ein Endabschnitt 138 des hier exemplarisch angegebenen Planenbrettes 32 bevorzugt unter einer leichten Spielpassung einsetzbar bzw. aufnehmbar. Durch das U-Profil 130 ist eine zuverlässige Lagesicherung des Planenbrettes 32 gegenüber Kräften, die insbesondere parallel zur Querachse des Nutzfahrzeugs einwirken, gewährleistet. In eine in den Endabschnitt 138 eingebrachte Bohrung 140 ist der Zapfen 82 des Zapfenwinkels 52 zumindest bereichsweise formschlüssig einbringbar. Hierdurch ergibt sich eine Festlegung des Planenbrettes 32 gegenüber äußeren mechanischen Kräften, die im Wesentlichen parallel zur Längsachse des Nutzfahrzeugs wirken, wodurch sich im Zusammenspiel mit dem U-Profil 130 - wie im Fall der ersten Ausführungsform der Halterung 34 - eine form- und kraftschlüssige Anbindung des Planenbrettes 32 an die Runge 20 gegenüber allen parallel zur Ladefläche des Nutzfahrzeugs angreifenden Kräften ergibt. Diese zweite Ausführungsvariante in Form der Halterung 40 weist gegenüber der ersten Ausführungsvariante insbesondere den Vorteil auf, dass anstelle einer Vielzahl von Taschen lediglich ein durchgehendes U-Profil an der betreffenden Runge des Nutzfahrzeugaufbaus vorzusehen ist. Darüber hinaus kann ein und dasselbe U-Profil 130 für benachbarte Rungen benutzt werden, so dass nur noch die Zapfenwinkel spiegelsymmetrisch ausgestaltet sein müssen.

Das Einsetzen eines Planenbrettes in zwei an zwei benachbarten Rungen angeordneten und zueinander weisenden Halterungen 40 mit einem U-Profil ist im Allgemeinen nicht möglich, so dass die Halterung 40 gemäß der zweiten Ausführungsvariante stets nur einseitig in Kombination mit einer zweiten Halterung 34 nach Maßgabe der ersten Ausführungsvariante vorzusehen ist.

Die vorliegend beschriebenen Taschen, U-Profile und/oder Zapfenwinkel sind zwar vorteilhafterweise mittels Nieten und/oder Bolzenverbindungen mit den Rungen verbunden. Die Taschen, U-Profile und/oder Zapfenwinkel sind jedoch bei alternativen Ausführungen mittels Schweißverbindungen an den Rungen befestigt.

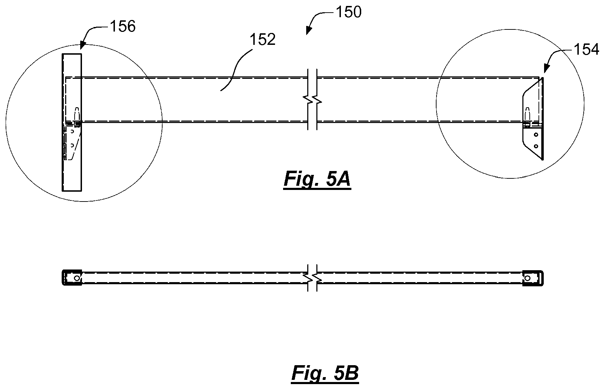

Fig. 5A zeigt eine weitere Ausführungsvariante einer Planenbrettanordnung 150 in einer Seitenansicht, während Fig. 5B die Planenbrettanordnung gemäß Fig. 5A in einer Ansicht von oben zeigt. Ein Planenbrett 152 ist am rechtsseitigen Ende in einer Planenbretttasche 154 angeordnet, während ein linksseitiges Ende des Planenbretts 152 in einem Planenbrett-U-Profil 156 angeordnet ist. Die rechts- und linksseitigen Anordnungen können aber auch gleichartig oder vertauscht ausgebildet sein.

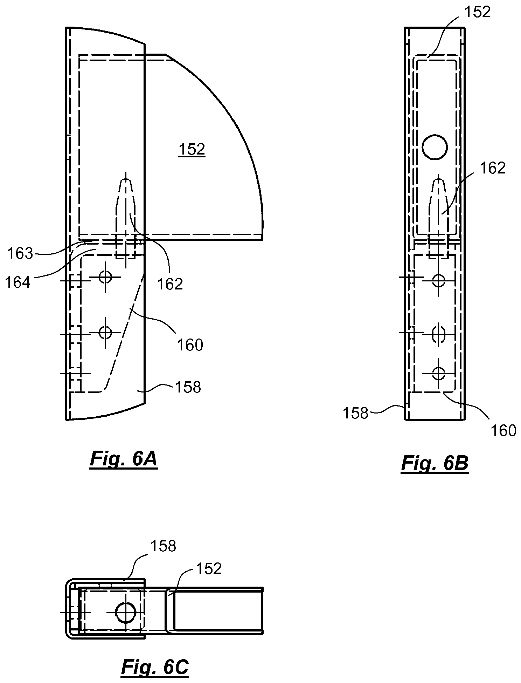

Fig. 6A zeigt das linksseitige Ende des Planenbretts 152 gemäß Fig. 5A in dem Planenbrett-U-Profil im vergrößerten Maßstab. Fig. 6B zeigt den in Fig. 6A gezeigten Bereich in einer Ansicht von der linken Seite, während Fig. 6C den Bereich von Fig. 6A in einer Ansicht von oben zeigt. In den Fig. 6A, B und C trägt ein U-Profil 158 einen Zapfenwinkel 160, der wiederum einen Zapfen 162 trägt. Das Planenbrett 152 liegt - vorzugsweise unter Zwischenschaltung einer Gummiplatte 163 - auf einem Tragflansch 164 des Zapfenwinkels 160 auf, wobei der Zapfen 162 durch eine Ausnehmung in das Planenbrett 152 hineinragt. Das Planenbrett-U-Profil 156 bildet entweder eine Runge oder ist an einer Runge befestigt.

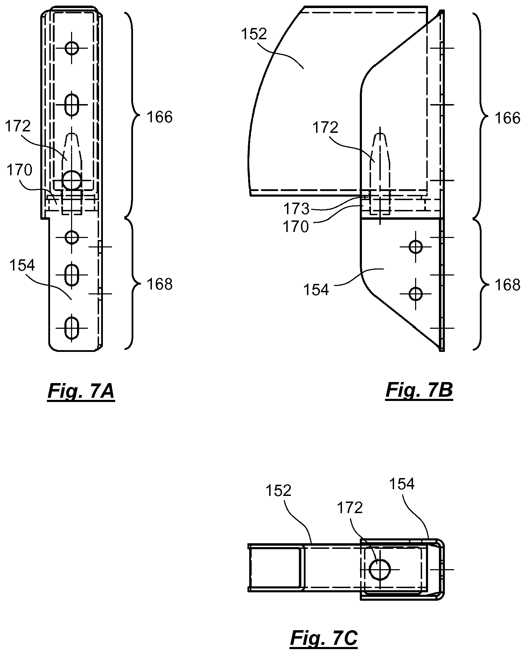

Fig. 7A, B und C zeigen den rechtsseitigen Bereich der Planenbrettanordnung 150 gemäß Fig. 5A in einem vergrößerten Ausschnitt.

Fig. 7A zeigt die Planbretttasche 154 in einer Ansicht von der rechten Seite, während Fig. 7B diese Planenbretttasche 154 in einer Frontalansicht und Fig. 7C in einer Ansicht von oben zeigt.

Die Planenbretttasche 154 weist einen oberen Abschnitt 166, der ein U-förmiges Profil aufweist, und einen unteren Abschnitt 168, der ein L-förmiges Profil aufweist, auf. Im unteren Bereich des oberen Abschnitts 166 ist ein Tragflansch 170 angebracht, insbesondere angeschweißt, der einen Zapfen 172 trägt. Der Tragflansch 170 dient - vorzugsweise unter Zwischenschaltung einer Gummiplatte 173 - als Auflage für das Planenbrett 152, wobei der Zapfen 172 durch eine entsprechende Ausnehmung in dem Planenbrett eindringt.

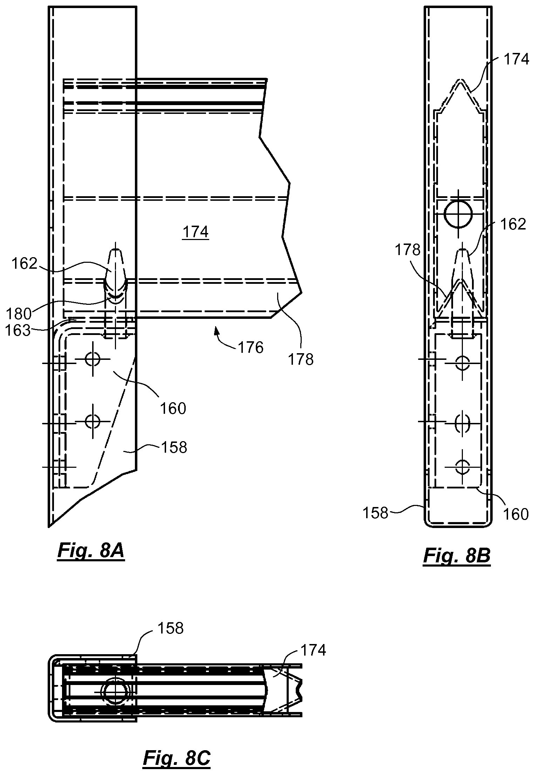

Fig. 8A, B und C entsprechen im Wesentlichen dem Ausführungsbeispiel gemäß Fig. 6A, B und C, wobei jedoch das Planenbrett 174 abweichend vom Planenbrett 152 ausgebildet ist. Das Planenbrett 174 weist an seiner unteren Schmalseite 176 eine Sicke 178 auf, derart, dass sich eine dachartige Struktur im unteren Bereich des Planenbretts ergibt. In diesem Bereich ist ein Loch 180 für die Aufnahme des Zapfens 162 vorgesehen. Dieses Loch weist gegenüber einem Loch in einer ebenen Fläche einen größeren Rand auf. Dies führt dazu, dass die Auflagefläche des Zapfens auf die untere Schmalseite 176 des Planenbrettes 174 größer ist, so dass bei einer axialen Zugbeanspruchung des Planenbrettes 174 geringere Verformungskräfte auf das Material des Planenbrettes 174 einwirken, so dass die Auflaufwirkung des Materials des Planenbrettes am Zapfen 162 reduziert wird. Insgesamt verträgt das Planenbrett 174 aufgrund dieser besonderen Ausgestaltung höhere Zugbelastungen. Zusätzlich oder alternativ kann aber auch die Wandstärke des Planenbrett-Hohlprofils aufgrund dieser Eigenschaft dünner ausgebildet sein als bei dem Planenbrett 152 gemäß Fig. 6A, B und C.

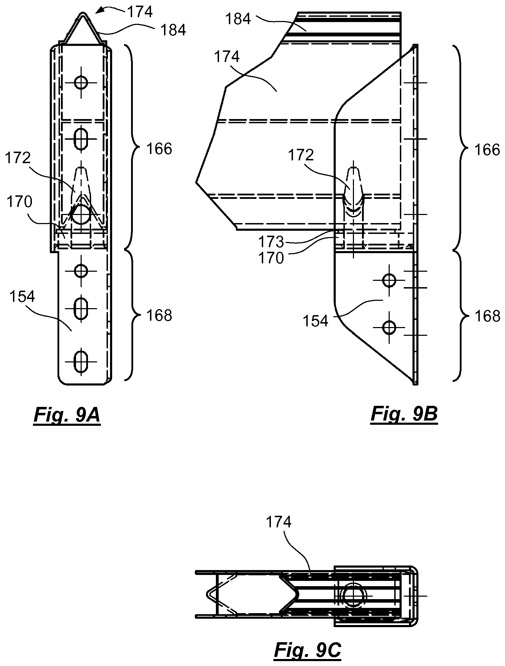

Fig. 9A, B und C entspricht im Wesentlichen der Ausführungsvariante gemäß Fig. 7A, B und C, jedoch mit einem Planenbrett 174, wie es im Zusammenhang mit Fig. 8A, B und C beschrieben worden ist.

Das Planenbrett 174 weist nicht nur im Bereich der unteren Schmalseite 176 eine Sicke 178 auf, sondern auch im Bereich der oberen Schmalseite 182 eine dachartige Kontur 184. Diese dachartige Kontur 184 korrespondiert mit der Kontur der Sicke 178, so dass ein Ineinandergreifen der dachartigen Kontur 184 in die Kontur der Sicke 178 ermöglicht wird. Stapelt man somit mehrere derartig ausgebildete Planenbretter 174 in einem die jeweiligen Enden umgreifenden U-Profil, so können hohe Stabilitäten und darüber hinaus auch ein Regenschutz auch ohne zusätzliche Plane erreicht werden.

Darüber hinaus kann vorteilhafterweise die Sicke 178 in eine bodenseitige Leiste eingebracht werden, wodurch hohe seitliche Kräfte, beispielsweise durch rutschende Ladung, aufgenommen werden können.

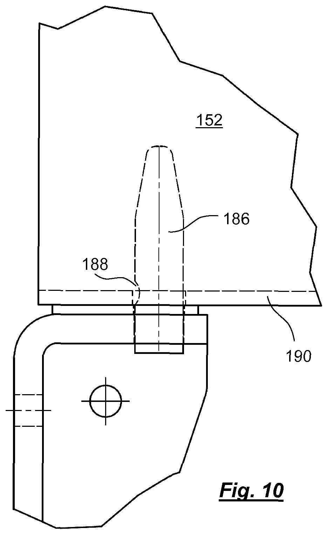

Fig. 10 zeigt ein besonderes Ausführungsbeispiel eines Zapfens 186, der in ein Planenbrett, beispielsweise gemäß 152, eingreift. Dieser Zapfen 186 weist eine Sicke 188 auf, welche eine Vertiefung in dem Bereich des Zapfens 186 bildet, in den eine untere Schmalseite 190 des Planenbrettes eingreifen kann.

Diese Sicke 188 kann entweder tangential umlaufend am Zapfen 186 oder nur abschnittsweise umlaufend vorgesehen sein.

Die Sicke 188 trägt dazu bei, dass bei einer axialen Belastung des Planenbretts 152 eine Verhakung des Planenbretts 152 mit dem Zapfen 186 stattfindet, wodurch die Stabilität des Nutzfahrzeugaufbaus 12 insgesamt erhöht wird.

## Patentansprüche

1. Planenbrettanordnung (28) mit mindestens einem Planenbrett (30,32) und mindestens zwei Halterungen (34-40), wobei das mindestens eine Planenbrett (30,32) zwischen zwei benachbarten Rungen (14-20) eines Planenaufbaus (44) eines Nutzfahrzeugs (10) in den jeweils an benachbarten Rungen (14-20) befestigten und zueinander weisenden Halterungen (34-40) aufnehmbar ist,
**dadurch gekennzeichnet, dass**
zwei Halterungen (34,36) jeweils einen Zapfenwinkel (52) und eine Tasche (50) zur Aufnahme eines Endabschnittes (100,102,138) eines als einteiliges Hohlprofil ausgebildeten Planenbrettes (30,32) aufweisen oder mindestens eine Halterung (38) einen Zapfenwinkel (52) sowie eine Tasche (50) aufweist und mindestens eine Halterung (40) ein U-Profil (130) und mindestens einen Zapfenwinkel (52) zur Aufnahme eines Endabschnittes (100,102,138) eines als einteiliges Hohlprofil ausgebildeten Planenbrettes (30,32) aufweist, wobei in beiden Endabschnitten (100,102,138) des mindestens einen Planenbrettes (30,32) eine Ausnehmung eingebracht ist, in die jeweils ein Zapfen (82) eines Zapfenwinkels (52) zumindest bereichsweise formschlüssig einbringbar ist, um unabhängig von einer Plane (26) einen kraftschlüssigen Verbund der Rungen (14-20) gegenüber im Wesentlichen parallel zu einer Ladefläche (22) des Nutzfahrzeugs (10) angreifenden mechanischen Kräften zu erreichen.

2. Planenbrettanordnung (28) nach Anspruch 1,
**dadurch gekennzeichnet, dass**
der Zapfen (82) eine Sicke (188) aufweist.

3. Planenbrettanordnung (28) nach Anspruch 1 oder 2,
**dadurch gekennzeichnet, dass**
das Hohlprofil wenigstens eine in Längsrichtung des Hohlprofils verlaufende Sicke (178) aufweist.

4. Planenbrettanordnung (28) nach Ansprüche 1 bis 3,
**dadurch gekennzeichnet, dass**
das Planenbrett (30,32) mit einem Rechteckhohlprofil gebildet ist, dessen Längsseiten (108,110) eine Wandstärke (118) aufweisen, die größer als eine Wandstärke (116) der Schmalseiten (112,114) ist, oder dessen Längsseiten und Schmalseiten gleiche Wandstärken aufweisen, und/oder
das Hohlprofil mit oder aus einem Leichtmetall, insbesondere mit einer Aluminiumlegierung gebildet ist.

5. Planenbrettanordnung (28) nach einem der Ansprüche 1 bis 4,
**dadurch gekennzeichnet, dass**
die Ausnehmungen in beiden Endabschnitten (100,102,138) eines Planenbrettes (30,32) als Bohrungen (104,106,140) ausgeführt oder quadratisch oder rechteckig ausgebildet sind.

6. Planenbrettanordnung (28) nach einem der Ansprüche 1 bis 5,
**dadurch gekennzeichnet, dass**
die mindestens eine Tasche (50) eine Rückwand (54) aufweist, an die sich unter einem rechten Winkel beidseitig eine laderaumseitige und eine planenseitige Seitenwand (56,58) anschließt, wobei an den parallel beabstandet zueinander verlaufenden Seitenwänden (56,58) jeweils unter einem rechten Winkel eine Bodenlasche (62,64) als Auflager für ein Planenbrett (30,32) ausgebildet ist.

7. Planenbrettanordnung (28) nach Anspruch 6,
**dadurch gekennzeichnet, dass**
die planenseitige Seitenwand (58) der Tasche (50) eine größere Höhe als die laderaumseitige Seitenwand (56) der Tasche (50) aufweist und die Rückwand (54) eine schräg verlaufende Außenkante (72) aufweist, und/oder
die planenseitige Seitenwand (58) mindestens eine Ausnehmung, insbesondere eine Bohrung (68), aufweist.

8. Planenbrettanordnung (28) nach einem der Ansprüche 6 oder 7,
**dadurch gekennzeichnet, dass**
die Bodenlaschen (62,64) durch einen Spalt (66) separiert sind und in beide Bodenlaschen (62,64) eine Ausnehmung eingebracht ist, die gemeinsam eine Durchführung für einen Zapfen (82) bilden.

9. Planenbrettanordnung (28) nach einem der Ansprüche 1 bis 8,
**dadurch gekennzeichnet, dass**
die mindestens zwei Zapfenwinkel (52) einen Rückenflansch (76) zur Befestigung an einer Runge (14-20) aufweisen, der unter einem rechten Winkel in eine planenseitige Knotenwand (78) übergeht, an die sich unter einem rechten Winkel ein Tragflansch (80) anschließt, in dem ein Zapfen (82) befestigt, insbesondere eingeschweißt, ist.

10. Planenbrettanordnung (28) nach Anspruch 9,
**dadurch gekennzeichnet, dass**
eine Tragflanschkante (92) mit einer Rückenflanschkante (94) des Zapfenwinkels (52) verbunden, insbesondere verschweißt, ist.

11. Planenbrettanordnung (28) nach einem der Ansprüche 1 bis 10,
**dadurch gekennzeichnet, dass**
die Endabschnitte (100,102,138) der Planenbretter (30,32) und/oder die Bodenlaschen (62,64) der Taschen (50) und/oder die Tragflansche (80) der Zapfenwinkel (52) zumindest bereichsweise mit einem Dämpfungsmittel, insbesondere einem plattenförmigen Elastomer, zur Schall- und Schwingungsdämpfung versehen sind.

12. Planenbrettanordnung (28) nach einem der Ansprüche 1 bis 11,
**dadurch gekennzeichnet, dass**
die Kegelstumpfabschnitte (88) der Zapfen jeweils einen Spitzenabschnitt (90) mit einem kleinen Krümmungsradius aufweisen und/oder die Kegelstumpfabschnitte Spitzenabschnitte (90) mit einer erhöhten mechanischen Härte aufweisen.

13. Planenbrettanordnung (28) nach einem der Ansprüche 1 bis 12,
**dadurch gekennzeichnet, dass**
das U-Profil (130) aus Stahl oder einer Leichtmetalllegierung, insbesondere einer Aluminiumlegierung, gebildet ist.

14. Nutzfahrzeugaufbau (12) mit einer Ladefläche (22) und einem Planenaufbau (44) für ein Nutzfahrzeug (10), wobei der Planenaufbau (44) eine Vielzahl von Rungen (14-20) und mindestens eine Plane (26) umfasst,
**dadurch gekennzeichnet, dass**
der Nutzfahrzeugaufbau (12) mindestens eine Planenbrettanordnung (28) nach einem der Ansprüche 1 bis 13 aufweist.

15. Nutzfahrzeug (10), insbesondere Lastkraftwagen und/oder Lastanhänger,
**dadurch gekennzeichnet, dass**
das Nutzfahrzeug (10) mindestens einen Nutzfahrzeugaufbau (12) nach Anspruch 14 aufweist.

## Claims

1. A tarpaulin board assembly (28) having at least one tarpaulin board (30, 32) and at least two holders (30-40), wherein the at least tarpaulin board (30, 32) can be received between two adjacent posts (14-20) of a tarpaulin structure (44) of a commercial vehicle (10) in the holders (34-40) which are fastened in each case on adjacent posts and face one other,
**characterized in that**
two holders (34, 36) each have a pin bracket (52) and a pocket (50) for receiving an end portion (100, 102, 138) of a tarpaulin board (30, 32) formed as a one-piece hollow profile or that at least one holder (38) has a pin bracket (52) as well as a pocket (50) and at least one holder (40) has a u-profile (130) and at least one pin bracket (52) for receiving an end portion (100, 102, 138) of a tarpaulin board (30, 32) that is formed as a one-piece hollow profile, wherein in both end portions (100, 102, 138) of the at least one tarpaulin board (30, 32) there is provided a recess in which in each case one pin (82) of a pin bracket (52) can be inserted at least in sections in a positive-locking manner so as to achieve, regardless of a tarpaulin (26), a positive-locking connection of the posts (14-20) with respect to mechanical forces that act substantially parallel to a cargo bed (22) of the commercial vehicle (10).

2. The tarpaulin board assembly (28) according to claim 1,
**characterized in that**
the pin (82) has a groove (188).

3. The tarpaulin board assembly (28) according to claim 1 or 2,
**characterized in that**
the hollow profile has at least one groove (178) extending in the longitudinal direction of the hollow profile.

4. The tarpaulin board assembly (28) according to claims 1 to 3,
**characterized in that**
the tarpaulin board (30, 32) is formed with a rectangular hollow profile, the longitudinal sides (108, 110) of which have a wall thickness (118) that is larger than a wall thickness (116) of the narrow sides (112, 114), or the longitudinal sides and narrow sides of which have the same wall thicknesses, and/or the hollow profile is formed with or from a light metal, in particular with an aluminum alloy.

5. The tarpaulin board assembly (28) according to any one of claims 1 to 4,
**characterized in that**
the recesses in both end portions (100, 102, 138) of a tarpaulin board (30, 32) are implemented as drill holes (104, 106, 140) or are formed to be square or rectangular.

6. The tarpaulin board assembly (28) according to any one of claims 1 to 5,
**characterized in that**
the at least one pocket (50) has a rear wall (54) to which there is connected on both sides, at right angles, a sidewall on the cargo space side and the tarpaulin side (56, 58), wherein on the side walls (56, 58) extending parallel to and spaced apart from one another there is formed in each case at right angles one bottom plate (62, 64) as a support for a tarpaulin board (30, 32).

7. The tarpaulin board assembly (28) according to claim 6,
**characterized in that**
the side wall (58) of the pocket (50) on the tarpaulin side has a greater height than the side wall (56) of the pocket (50) on the cargo space side, and the rear wall (54) has an obliquely extending outer edge (72), and/or
the side wall (58) on the tarpaulin side has at least one recess, in particular one drill hole (68).

8. The tarpaulin board assembly (28) according to any one of claims 6 or 7,
**characterized in that**
the bottom plates (62, 64) are separated by a gap (66) and a recess is provided in both bottom plates (62, 64) which jointly form a passage for a pin (82).

9. The tarpaulin board assembly (28) according to any one of claims 1 to 8,
**characterized in that**
the at least two pin brackets (52) have a rear flange (76) for fastening to a post (14-20), which rear flange transitions at right angles into a gusset wall (78) to which a support flange (80) is connected at right angles, in which support flange a pin (82) is fastened, in particular welded in place.

10. The tarpaulin board assembly (28) according to claim 9,
**characterized in that**
a support flange edge (92) is connected, in particular welded, to a rear flange edge (94) of the pin bracket (52) .

11. The tarpaulin board assembly (28) according to any one of claims 1 to 10,
**characterized in that**
the end portions (100, 102, 138) of the tarpaulin boards (30, 32) and/or the bottom plates (62, 64) of the pockets (50) and/or the support flanges (80) of the pin brackets (52) are provided at least in sections with a damping means, in in particular a plate-shaped elastomer, for noise and vibration damping.

12. The tarpaulin board assembly (28) according to any one of claims 1 to 11,
**characterized in that**
the truncated cone portions (88) of the pins each have a tip portion (90) with a small curvature radius and/or the truncated cone portions have tip portions (90) with increased mechanical hardness.

13. The tarpaulin board assembly (28) according to any one of claims 1 to 12,
**characterized in that**
the u-profile (130) is formed from steel or a light metal alloy, in particular an aluminum alloy.

14. A commercial vehicle superstructure (12) having a cargo bed (22) and a tarpaulin structure (44) for a commercial vehicle (10), wherein the tarpaulin structure (44) comprises a plurality of posts (14-20) and at least one tarpaulin (26),
**characterized in that**
the commercial vehicle superstructure (12) has at least one tarpaulin board assembly (28) according to any one of claims 1 to 13.

15. A commercial vehicle (10), in particular truck and/or goods trailer,
**characterized in that**
the commercial vehicle (10) has at least one commercial vehicle superstructure (12) according to claim (14).

## Revendications

1. Ensemble de planche sous bâche (28) comprenant au moins une planche sous bâche (30, 32) et au moins deux supports (34-40), dans lequel l'au moins une planche sous bâche (30, 32) peut être reçue entre deux poteaux voisins (14-20) d'une structure de bâche (44) d'un véhicule utilitaire (10), dans les supports (34-40) respectivement fixés à des poteaux voisins (14-20) et tournés les uns vers les autres,
**caractérisé en ce que**
deux supports (34, 36) présentent respectivement un angle de tourillon (52) et une poche (50) pour la réception d'une partie d'extrémité (100, 102, 138) d'une planche sous bâche (30, 32) conçue comme un profilé creux monobloc, ou **en ce qu'**au moins un support (38) présente un angle de tourillon (52) ainsi qu'une poche (50) et au moins un support (40) présente un profilé en U (130) et au moins un angle de tourillon (52) pour la réception d'une partie d'extrémité (100, 102, 138) d'une planche sous bâche (30, 32) conçue comme un profilé creux monobloc, un évidement étant intégré dans les deux parties d'extrémité (100, 102, 138) de l'au moins une planche sous bâche (30, 32), dans lequel un tourillon (82) d'une angle de tourillon (52) peut être respectivement au moins partiellement inséré par complémentarité de forme, afin d'obtenir un assemblage par adhérence des poteaux (14-20) par rapport à des forces mécaniques agissant essentiellement parallèlement à une surface de chargement (22) du véhicule utilitaire (10), indépendamment d'une bâche (26).

2. Ensemble de planche sous bâche (28) selon la revêtement 1,
**caractérisé en ce que**
les tourillons (82) présentent une encoche (188).

3. Ensemble de planche sous bâche (28) selon la revendication 1 ou 2,
**caractérisé en ce que**
le profilé creux présente au moins une encoche (178) s'étendant dans la direction longitudinale du profilé creux.

4. Ensemble de planche sous bâche (28) selon les revendications 1 à 3,
**caractérisé en ce que**
la planche sous bâche (30, 32) est formée avec un profilé creux rectangulaire, dont les côtés longitudinaux (108, 110) présentent une épaisseur de paroi (118) supérieure à une épaisseur de paroi (116) des côtés étroits (112, 114), ou dont les côtés longitudinaux et les côtés étroits présentent des épaisseurs de paroi identiques, et/ou **en ce que**
le profilé creux est formé avec ou à partir d'un métal léger, en particulier avec un alliage d'aluminium.

5. Ensemble de planche sous bâche (28) selon l'une des revendications 1 à 4,
**caractérisé en ce que**
les évidements dans les deux parties d'extrémité (100, 102, 138) d'une planche sous bâche (30, 32) sont conçus comme des perçages (104, 106, 140) ou formées de façon carrée ou rectangulaire.

6. Ensemble de planche sous bâche (28) selon l'une des revendications 1 à 5,
**caractérisé en ce que**
l'au moins une poche (50) présente une paroi arrière (54), à laquelle est raccordée des deux côtés une paroi latérale (56, 58) côté espace de chargement et côté bâche en formant un angle droit, une patte de fond (62, 64) étant formée respectivement en tant qu'appui pour une planche sous bâche (30, 32) en formant un angle droit sur les parois latérales (56, 58) s'étendant parallèlement de façon espacée l'une par rapport à l'autre.

7. Ensemble de planche sous bâche (28) selon la revendication 6,
**caractérisé en ce que**
la paroi latérale côté bâche (58) de la poche (50) présente une hauteur supérieure à celle de la paroi latérale côté espace de chargement (56) de la poche (50), et la paroi arrière (54) présente un bord extérieur (72) s'étendant de façon oblique, et/ou
la paroi latérale côté bâche (58) présente au moins un évidement, en particulier un perçage (68).

8. Ensemble de planche sous bâche (28) selon l'une des revendications 6 ou 7,
**caractérisé en ce que**
les pattes de fond (62, 64) sont séparées par une fente (66) et **en ce qu'**un évidement est intégré dans les deux pattes de fond (62, 64), formant conjointement un passage pour un tourillon (82).

9. Ensemble de planche sous bâche (28) selon l'une des revendications 1 à 8,
**caractérisé en ce que**
les au moins deux angles de tourillon (52) présentent une bride dorsale (76) pour la fixation à un poteau (14-20), laquelle se prolonge par une paroi à noeuds (78) côté bâche en formant un angle droit, à laquelle se raccorde une bride de support (80) en formant un angle droit, dans laquelle est fixé un tourillon (82), celui-ci étant en particulier soudé.

10. Ensemble de planche sous bâche (28) selon la revendication 9,
**caractérisé en ce que**
un bord de bride de support (92) est relié, en particulier soudé, à un bord de bride dorsale (94) de l'angle de tourillon (52).

11. Ensemble de planche sous bâche (28) selon l'une des revendications 1 à 10,
**caractérisé en ce que**
les partie d'extrémité (100, 102, 138) des planches sous bâche (30, 32) et/ou les pattes de fond (62, 64) des poches (50) et/ou les brides de support (80) des angles de tourillon (52) sont au moins par endroits pourvus d'un moyen d'amortissement, en particulier d'un élastomère en forme de plaque, pour l'atténuation du bruit et des vibrations.

12. Ensemble de planche sous bâche (28) selon l'une des revendications 1 à 11,
**caractérisé en ce que**
les parties tronconiques (88) des tourillons présentent respectivement une partie en pointe (90) avec un petit rayon de courbure, et/ou **en ce que** les parties tronconiques présentent des parties en pointe (90) avec une dureté mécanique accrue.

13. Ensemble de planche sous bâche (28) selon l'une des revendications 1 à 12,
**caractérisé en ce que**
le profilé en U (130) est constitué d'acier ou d'un alliage de métaux légers, en particulier d'un alliage d'aluminium.

14. Structure de véhicule utilitaire (12) comprenant une surface de chargement (22) et une structure de bâche (44) pour un véhicule utilitaire (10), dans laquelle la structure de bâche (44) comporte une pluralité de poteaux (14-20) et au moins une bâche (26),
**caractérisée en ce que**
la structure de véhicule utilitaire (12) présente au moins un ensemble de planche sous bâche (28) selon l'une des revendications 1 à 13.

15. Véhicule utilitaire (10), en particulier un camion et/ou une remorque de chargement,
**caractérisé en ce que**
le véhicule utilitaire (10) présente au moins une structure de véhicule utilitaire (12) selon la revendication 14.
